# EUROPÄISCHE PATENTSCHRIFT

(11) **EP 3 604 034 B1**
(45) Veröffentlichungstag und Bekanntmachung des Hinweises auf die Patenterteilung: **17.02.2021**
(21) Anmeldenummer: 19185197.1
(22) Anmeldetag: 09.07.2019
(51) Int. Cl.: B60P 3/22, B65D 88/72, B65G 53/16

(54) **FAHRZEUG MIT EINEM DRUCKBEHÄLTER ZUR AUFNAHME VON BRENNSTOFFPELLETS**
VEHICLE WITH A PRESSURE VESSEL FOR RECEIVING FUEL PELLETS
VÉHICULE À RÉSERVOIR SOUS PRESSION DESTINÉ À RECEVOIR DES PELLETS DE COMBUSTIBLE

(30) Priorität: 01.08.2018 AT 506682018
(43) Veröffentlichungstag der Anmeldung: 05.02.2020
(73) Patentinhaber: Tropper Maschinen und Anlagen GmbH., 4846 Redlham (AT)
(72) Erfinder: Tropper, Johannes, 4690 Schwanenstadt (AT)
(74) Vertreter: Hübscher & Partner Patentanwälte GmbH

(56) Entgegenhaltungen:
- DE-A1-102008 019 995
- DE-U1-202018 100 113
- GB-A- 963 343

## Beschreibung

Die Erfindung bezieht sich auf ein Fahrzeug mit einem Druckbehälter zur Aufnahme von Brennstoffpellets, der wenigstens zwei wahlweise an die Druck- oder Saugseite eines Gebläses anschließbare Kammern mit je einem an eine Förderleitung angeschlossenen Austragstrichter umfasst.

In Vorratslagern für Brennstoffpellets, üblicherweise Holzpellets, die aus dem Vorratslager mittels einer Fördereinrichtung einem Heizkessel zugeführt werden, sammeln sich im Laufe der Zeit Pelletsreste in Form von Bruchstücken und Staub sowie andere Verunreinigungen an, sodass diese Vorratslager von Zeit zu Zeit gereinigt werden müssen, was eine Entleerung der Vorratslager bedingt. Da in der Regel keine Vorrichtungen zum Trennen der Brennstoffpellets von den Pelletsresten und anderen Verunreinigungen zur Verfügung stehen, erfolgt die Reinigung der Vorratslager, wenn diese weitgehend geleert sind, um den Verlust an mit den Pelletsresten zu verwerfenden Brennstoffpellets klein zu halten.

Zur Befüllung von Vorratslagern für Brennstoffpellets ist es bekannt, Fahrzeuge mit einem in einzelne Kammern unterteilten Druckbehälter einzusetzen. Die Brennstoffpellets werden mithilfe einer Ansaugleitung in die Kammern gefördert und über einen an eine Förderleitung angeschlossenen Austragstrichter ausgetragen. Zu diesem Zweck werden die Kammern entweder mit der Saug- oder der Druckseite eines Gebläses verbunden, sodass die jeweilige Kammer zum Ansaugen der Brennstoffpellets mit einem Unterdruck und zum Ausfördern der Brennstoffpellets mit einem Überdruck beaufschlagt werden kann. Mithilfe solcher Fahrzeuge könnte zwar eine vollständige Entleerung der Vorratslager durch ein Ansaugen der Brennstoffpellets und ihrer Reste in zumindest eine der Kammern des Druckbehälters vorgenommen werden, doch wird dadurch hinsichtlich der Wiedergewinnung der für die Beschickung eines Heizkessels noch geeigneten Brennstoffpellets nichts gewonnen Dokument DE 20 2018 100 113 U1 offenbart ein Fahrzeug mit Druckbehälter gemäß dem Oberbegriff des Anspruchs 1.

Der Erfindung liegt somit die Aufgabe zugrunde, eine einfache Möglichkeit zu schaffen, ein an eine Heizanlage angeschlossenes Vorratslager für Brennstoffpellets zu reinigen und mit den aus dem Entleergut gewonnenen Brennstoffpellets wieder zu befüllen.

Ausgehend von einem Fahrzeug der eingangs beschriebenen Art löst die Erfindung die gestellte Aufgabe dadurch, dass eine der beiden Kammern ein über einen Zyklonabscheider mit Brennstoffpellets enthaltendem Schüttgut beschickbares Rüttelsieb aufweist, dessen Überlaufende in der anderen Kammer mündet.

Durch diese Maßnahme gelangt das aus einem zu reinigenden Vorratsbehälter für Brennstoffpellets durch eine Ansaugleitung in die Kammer mit dem Rüttelsieb angesaugte Entleergut nach seiner Abscheidung aus dem Förderluftstrom auf das Rüttelsieb, mit dessen Hilfe die für die Beschickung des Heizkessels geeigneten Brennstoffpellets von den Pelletsresten, Staubanteilen und anderen Verunreinigungen getrennt werden. Die Loch- bzw. Maschenweite des Rüttelsiebs bestimmt dabei die Größe der zurückgehaltenen, wiederverwertbaren Brennstoffpellets.

Während die Brennstoffpellets über das Überlaufende des Rüttelsiebs in die anschließende Kammer des Druckbehälters gefördert werden, wird der durch die Bruchstücke der Pellets und dem feinkörnigeren Anteil des Entleerguts gebildete Siebdurchgang in dem sich unterhalb des Rüttelsiebs ergebenden Auffangraum der Kammer gesammelt, um anschließend ausgetragen zu werden. Der Unterdruck in der Kammer unterhalb des Rüttelsiebs unterstützt dabei den Durchtritt des feinkörnigeren Entleerguts durch das Rüttelsieb. Es muss allerdings dafür gesorgt werden, dass die vom Gebläse angesaugte Luft weitgehend staubfrei ist, was durch geeignete Filter in einfacher Weise sichergestellt werden kann. Aus der das Überlaufende des Rüttelsiebs aufnehmenden Kammer können die gesammelten Brennstoffpellets über den Austragstrichter ausgetragen und mithilfe der Förderleitung wieder in das Vorratslager gefördert werden.

Damit die Kammer des Druckbehälters mit dem Rüttelsieb nicht nur für die Pelletsreinigung, sondern auch für die Lieferung von Brennstoffpellets genützt werden kann, kann das Rüttelsieb zwischen einer einen Auffangraum für den Siebdurchgang nach oben abschließenden Arbeitsstellung und einer diesen Auffangraum freigebenden Ruhestellung verlagert werden, beispielsweise mithilfe einer Schwenklagerung des Rüttelsiebs.

Umfasst der Druckbehälter zumindest eine weitere Kammer mit einem an die Förderleitung anschließbaren Austragstrichter, so kann diese zusätzliche Kammer für die Lieferung von Brennstoffpellets genützt werden, ohne auf die Reinigungsfunktion der beiden anderen Kammern verzichten zu müssen. Die zusätzliche Kammer des Druckbehälters erlaubt außerdem ein Umladen der die gereinigten Brennstoffpellets aufnehmenden Kammer, wenn die Menge der wiederverwertbaren Brennstoffpellets des Entleerguts das Aufnahmevolumen dieser Kammer übersteigt.

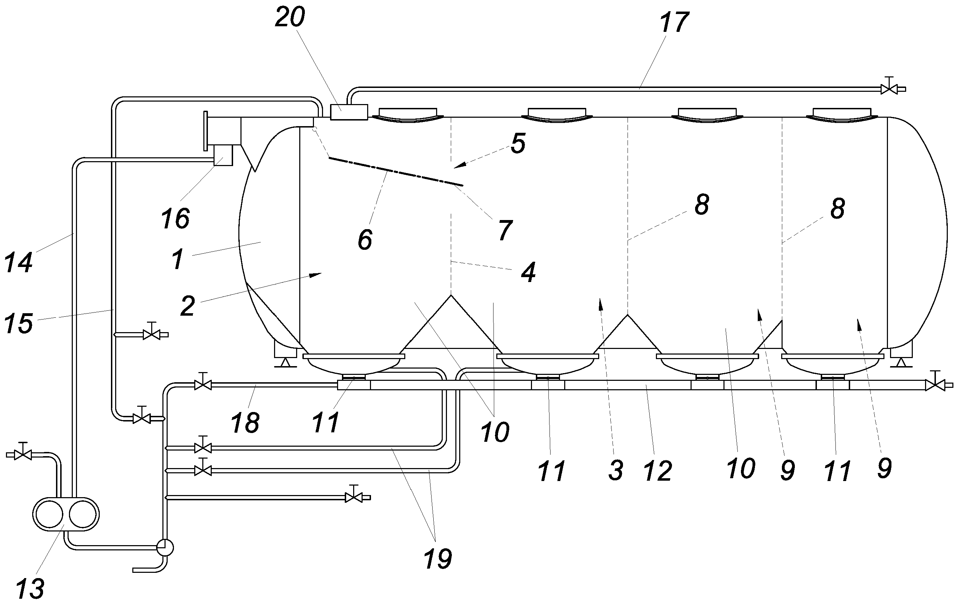

In der Zeichnung ist der Erfindungsgegenstand beispielsweise dargestellt, und zwar wird ein erfindungsgemäßes Fahrzeug in einem schematischen Blockschaltbild gezeigt.

Ein erfindungsgemäßes Fahrzeug umfasst einen auf einem aus Übersichtlichkeitsgründen nicht dargestellten Fahrgestell aufgebauten Druckbehälter 1, der zwei Kammern 2, 3 mit einer Trennwand 4 aufweist, die im oberen Bereich eine Durchtrittsöffnung 5 zwischen den beiden Kammern 2, 3 freigibt. Die Kammer 2 ist im oberen Einfüllbereich mit einem Rüttelsieb 6 versehen, das mit seinem Überlaufende 7 durch die Durchtrittsöffnung 5 der Trennwand 4 in die Kammer 3 ragt. An die Kammern 2, 3 können sich durch Trennwände 8 voneinander getrennte zusätzliche Kammern 9 anschließen. Die Kammern 2, 3 und 9 bilden Austragstrichter 10, die nach unten durch eine Entleerklappe 11 abgeschlossen und an eine gemeinsame Förderleitung 12 angeschlossen sind.

Zur Druckbeaufschlagung des Druckbehälters 1 dient eine Gebläse 13, vorzugsweise ein Drehkolbengebläse, das von einem Nebenantrieb des Fahrzeugs angetrieben und wahlweise durch eine Saugleitung 14 oder durch eine Druckleitung 15 mit dem Druckbehälter 1 verbunden wird. Wird der Druckbehälter 1 durch die über ein Filter 16 in den Druckbehälter 1 mündende Saugleitung 14 mit Unterdruck beaufschlagt, so kann der Druckbehälter 1 mithilfe einer Ansaugleitung 17 beladen werden, durch die Schüttgut zufolge des im Druckbehälter 1 herrschenden Unterdrucks in den Druckbehälter 1 angesaugt wird.

Zum Austragen von Schüttgut wird der Druckbehälter 1 mit Überdruck beaufschlagt, indem er über die Druckleitung 15 mit der Druckseite des Gebläses 13 verbunden wird. Der sich im Druckbehälter 1 aufbauende Druck bewirkt nach dem Öffnen einer der Entleerklappen 11, dass Schüttgut durch den Austragstrichter 10 mit der geöffneten Entleerklappe 11 in die Förderleitung 12 ausgetragen und mit einem Förderluftstrom durch die Förderleitung 12 gefördert wird. Um im Bedarfsfall ausreichend Förderluft für die Schüttgutförderung durch die Förderleitung 12 zur Verfügung stellen zu können, ist die Förderleitung 12 mit der Druckseite des Gebläses 13 durch eine Zuluftleitung 18 verbunden. Um Brückenbildungen im Schüttgut innerhalb der Austragstrichter 10 zu vermeiden, kann zusätzlich Druckluft in die Austragstrichter 10 eingeblasen werden, und zwar über Leitungen 19.

Die entsprechenden Leitungsverbindungen sind aus Übersichtlichkeitsgründen lediglich für die Kammern 2 und 3 gezeichnet. Die Kammern 9 sind analog in bekannter Weise an das Sauggebläse 13 angeschlossen.

Zur Reinigung von Vorratslagern für Brennstoffpellets werden die Brennstoffpellets zusammen mit dem sich im Vorratslager ansammelnden feinkörnigeren Anteil aus Pelletsresten, Staub und anderen Verunreinigungen über die Ansaugleitung 17 in die Kammer 2 angesaugt, die über die Saugleitung 14 mit Unterdruck beaufschlagt wird. das angesaugte Entleergut wird über einen Zyklonabscheider 20 aus dem Förderluftstrom abgetrennt und gelangt auf das Rüttelsieb 6, entlang dessen die Brennstoffpellets vom Siebdurchgang getrennt und über das Überlaufende 7 in die Kammer 3 abgeworfen werden, während der Siebdurchgang in der Kammer 2 gesammelt wird. Die Brennstoffpellets aus der Kammer 3 können dann getrennt vom Siebdurchgang durch die Förderleitung 12 ausgetragen und in das Vorratslager zurückgefördert werden. Der Siebdurchgang aus der Kammer 2 kann ebenfalls mithilfe der Förderleitung 12 ausgetragen und dann gegebenenfalls verworfen werden.

Enthält das Entleergut eine das Fassungsvermögen der Kammer 3 übersteigende Menge an Brennstoffpellets, kann zumindest ein Teil der Brennstoffpellets aus der Kammer 3 in eine der zusätzlichen Kammern 9 gefördert werden, um Platz für die Restmenge an Brennstoffpellets zu schaffen. Die Kammern 9 dienen üblicherweise zum Transport von zu liefernden Brennstoffpellets.

Damit auch die Kammern 2 und 3 zur Pelletslieferung genützt werden können, empfiehlt es sich, das Rüttelsieb 6 aus der gezeichneten Arbeitsstellung, in der es einen durch die Kammer 2 gebildeten Auffangraum für den Siebdurchgang nach oben abschließt, in eine Ruhestellung zu verlagern, in der es diesen Auffangraum freigibt, sodass die Kammer 2 von oben mit zu liefernden Brennstoffpellets gefüllt werden kann.

## Patentansprüche

1. Fahrzeug mit einem Druckbehälter (1) zur Aufnahme von Brennstoffpellets, der wenigstens zwei wahlweise an die Druck- oder Saugseite eines Gebläses (13) anschließbare Kammern (2, 3) mit je einem an eine Förderleitung (12) angeschlossenen Austragstrichter (10) umfasst, **dadurch gekennzeichnet, dass** eine der beiden Kammern (2, 3) ein über einen Zyklonabscheider (20) mit Brennstoffpellets enthaltendem Schüttgut beschickbares Rüttelsieb (6) aufweist, dessen Überlaufende (7) in der anderen Kammer (3) mündet.

2. Fahrzeug nach Anspruch 1, **dadurch gekennzeichnet, dass** das Rüttelsieb (6) zwischen einer einen Auffangraum für den Siebdurchgang nach oben abschließenden Arbeitsstellung und einer diesen Auffangraum freigebenden Ruhestellung verlagerbar ist.

3. Fahrzeug nach Anspruch 1 oder 2, **dadurch gekennzeichnet, dass** der Druckbehälter (1) zumindest eine weitere Kammer (9) mit einem an die Förderleitung (12) anschließbaren Austragstrichter (10) umfasst.

## Claims

1. Vehicle comprising a pressure vessel (1) for receiving fuel pellets, said pressure vessel comprising at least chambers (2, 3) which can be connected optionally to the pressure side or suction side of a fan (13) and have in each case a discharge cone (10) connected to a conveying line (12), **characterised in that** one of the two chambers (2, 3) has a vibrating screen (6) which can be loaded with bulk material, which contains fuel pellets, via a cyclone separator (20), the overflow end (7) of said vibrating screen issuing in the other chamber (3).

2. Vehicle as claimed in claim 1, **characterised in that** the vibrating screen (6) can be displaced between an operative position, which closes off a collection space for the screenings at the top, and a non-operative position which opens this collection space.

3. Vehicle as claimed in claim 1 or 2, **characterised in that** the pressure vessel (1) comprises at least one further chamber (9) having a discharge cone (10) which can be connected to the conveying line (12).

## Revendications

1. Véhicule doté d'une citerne pressurisée (1) pour contenir des granules de combustible qui comprend au moins deux compartiments (2, 3) pouvant être raccordés au choix du côté refoulement ou aspiration d'une soufflerie (13) avec chacun une trémie de déchargement (10) raccordée à une conduite de transport (12), **caractérisé en ce qu'**un des deux compartiments (2, 3) possède un tamis vibrant (6), dans lequel une marchandise en vrac contenant des granules de combustible peut être chargée via un séparateur cyclonique (20), dont l'extrémité de trop-plein (7) débouche dans l'autre compartiment (3).

2. Véhicule selon la revendication 1, **caractérisé en ce que** le tamis vibrant (6) peut être déplacé entre une position de travail raccordée vers le haut à un espace de réception pour le tamisage et une position de repos déconnectée de cet espace de réception.

3. Véhicule selon la revendication 1 ou 2, **caractérisé en ce que** la citerne pressurisée (1) possède au moins un autre compartiment (9) avec une trémie de déchargement (10) pouvant être raccordée à la conduite de transport (12).
